Europäisches Patentamt

(19) European Patent Office   (11) Publication number: **0 030 987**

Office européen des brevets   **B1**

(12)  **EUROPEAN PATENT SPECIFICATION**

(45) Date of publication of patent specification: **30.05.84**   (51) Int. Cl.³: **B 62 D 53/08**

(21) Application number: **79302962.0**

(22) Date of filing: **19.12.79**

(54) Universal fifth wheel hitch with controlled transverse movement.

(43) Date of publication of application:
**01.07.81 Bulletin 81/26**

(45) Publication of the grant of the patent:
**30.05.84 Bulletin 84/22**

(84) Designated Contracting States:
**BE DE FR GB NL**

(56) References cited:
**AU-A- 436 212
FR-A-1 187 462
US-A-3 122 382**

(73) Proprietor: **HOLLAND HITCH COMPANY
420 West 18th Street
Holland, Michigan (US)**

(72) Inventor: **Bush, James Harvey
5867 - 96th Avenue
Zeeland, Michigan (US)**
Inventor: **Martin, Samuel Albert
149 West 23rd Street
Holland, Michigan (US)**

(74) Representative: **Robinson, Anthony John
Metcalf et al
Kilburn & Strode 30 John Street
London, WC1N 2DD (GB)**

Courier Press, Leamington Spa, England.

EP 0 030 987 B1

## Description

This invention relates to fifth wheel assemblies for coupling a truck tractor to a trailer.

One fifth wheel hitch assembly that allows the fifth wheel to shift laterally in an arc to stabilise a trailer during side tilt of the trailer is described in United States patent specification 3 122 382. The stability resulting from this structure has caused it to gain considerable acceptance. A subsequent version of the apparatus is described in Australian patent specification 436 212 and New Zealand patent specification 153 126.

Another fifth wheel hitch assembly as acknowledged in the prior art part of claim 1, which allows a similar lateral displacement to be achieved is described in French patent specification 1 187 462.

The function of these hitch assemblies is such that a movable frame can arcuately laterally shift on a stationary frame in response to trailer tilt on uneven terrain, to keep the trailer centre of gravity directly over the tractor frame for stability. In the hitch described in the United States specification 3 122 382 mentioned above this movement is limited in either direction by stops, typically using rubber snubbers which provide some shock absorber effect at the very limits of movement. When the trailer moves beyond the uneven terrain, gravity forces operating through the trailer return the fifth wheel plate. Such rubber snubbers act wholly in compression. By contrast, rubber mounts are used in the hitch described in the French patent specification no. 1 187 462 but these act largely in shear during tilting of the trailer and can offer only a limited range of movement. In addition the rubber mounts allow relative vertical displacement of the fixed and movable frames.

Using a hitch such as that described in the United States patent specification 3 122 382 it has been found that, as the trailer tilts varying amounts during this stabilising action, the driver may actually be unaware of the tilting action or the extent thereof until the movable frame strikes the stop at the extreme shifted position. Ideally, the driver should be constantly aware when this stabilizing movement is occurring, and the extent to which it is occurring since the more knowledge the driver has as to the actions of his rig, the more confidence he has in his control of it. Ideally the driver should be provided with the facility to "feel" or "sense" the trailer tilt stabilizing movement, and the extent of movement occurring.

Moreover, with such a hitch, when a tractor is detached from a trailer that is on uneven terrain, the fifth wheel can be in a laterally tilted condition such that, when the driver attempts to recouple the tilted fifth wheel to another trailer on different terrain, difficulty can be experienced because of the fifth wheel being tilted relative to the orientation of the kingpin on the second trailer. This can cause damage to the equipment or; at the least, extra effort by the driver to straighten up the fifth wheel plate. This problem is not encountered in the hitch with resiliently biased movable and fixed frames as described in French patent specification no. 1 187 462 because the movable frame is automatically returned to a central position by the mounting rubbers. The use of such rubbers, particularly the fact that they work largely in shear during tilting, involves a number of disadvantages which are overcome by the structure of the hitch according to the present invention.

According to the present invention, a fifth wheel hitch assembly comprises an elongate stationary frame with arcuately concave bearing plates at opposite ends thereof, a movable frame with a pair of cradles forming a pair of convex shoes seated on the concave bearing plates, a tie rod between the cradles, a fifth wheel plate, pivot bearings on the movable frame mounting the fifth wheel plate, the movable frame and fifth wheel plate being shiftable on the stationary frame from an intermediate position in either or two opposite directions, stop means between the movable frame and the stationary frame for limiting movement of the movable frame at predetermined extreme positions in either of the two opposite directions, and resilient biasing means for biasing the movable frame with respect to the fixed frame towards the said intermediate position, characterised in that the stationary frame has a centre plate fixed thereto and extending generally vertically between the cradles, and in that the resilient biasing means comprise a respective coil spring between each of the cradles and the centre plate for biasing the movable frame away from the predetermined extreme positions toward the said intermediate position, each coil spring acting to apply a biasing force which increases with increased movement of the movable frame towards one of the said extreme positions.

It has been found that such a structure provides the driver with a "feel" of the stabilizing tilt movement occurring, thereby giving him confidence. In addition to this, the coil springs cause the fifth wheel hitch plate, when uncoupled from a trailer, to be placed generally parallel to the truck tractor frame, regardless of the previous stabilizing angle of the hitch prior to uncoupling. Thus, the fifth wheel plate is then properly oriented for recoupling to another kingpin on another trailer on different terrain.

The invention may be carried into practice in various ways but one hitch assembly embodying the invention will now be described by way of example with reference to the accompanying drawings, in which:

Figure 1 is a perspective view of the hitch assembly;

Figure 2 is a vertical section of the hitch assembly; and

Figure 3 is a perspective view of the support structure for the hitch, with the fifth wheel plate removed.

The fifth wheel hitch assembly 10 includes a fifth wheel hitch plate subassembly 12 and a support subassembly 14, the latter including a fixed frame 38 and a movable frame 35.

The hitch plate comprises a conventional bifurcated element opening to the rear, having an upper bearing slide surface 16 and a pair of slide projections 18 straddling a kingpin-receiving slot 20. At the forward end of the slot is a conventional jaw structure 22 on a pin 23 unlockable by a conventional handle mechanism 24. On the opposite sides of the fifth wheel plate, at the underside thereof, is a pair of dependent bearing sockets or trunnions 26 receiving a pair of bearings 27 and bearing-retaining sleeves 28, all connected by a pair of coaxially aligned pivot pins 30. The common axis of these bearings is basically horizontal, parallel to the truck frame, and perpendicular to the direction of travel of the fifth wheel on a truck tractor, such direction being aligned with the longitudinal force to aft axis of the slot 20 in conventional fashion.

The bearing-retaining sleeves 28 are mounted on the upper portions of a pair of cradles 32 to the underside of which is integrally secured a pair of arcuate bearing shoes 34. The bearing shoes have underside bearing surfaces which are arcuately laterally convex and spaced from each other on opposite sides of the structure, having like radii of curvature such that they are arcuate portions of an imaginary circle having a radius greater than the distance between the outer portions of the stationary or fixed frame 38 on which the movable frame 35 is supported. This is to retain the centre of gravity of the trailer above the truck tractor frame as the trailer tilts sideways on uneven terrain.

The cradles 32 are interconnected by a tie rod 40, the central portion 40' of the rod being basically parallel to the underside frame structure of the fixed frame, and the two opposite ends 40" of the rod being at large obtuse angles to the centre portion to be generally parallel to the bearing shoes 34 and normal to upstanding flanges 32' of the cradles 32. The ends of the rod extend through the flanges 32'. Encircling the rod ends is a pair of generally cylindrical, resilient shock absorber snubbers 44 of rubber or the equivalent, preferably spaced from flanges 32' by a pair of respective washers 46 at the outer axial ends of the snubbers. At the inner axial ends of the snubbers is a pair of annular plates 48 of metal or the equivalent.

The fixed frame 38 includes a pair of laterally spaced frame elements which extend longitudinally relative to the direction of travel of the truck tractor and which have coplanar horizontal upper flanges 37 and integrally connected vertical flanges 36 for attachment to a truck tractor frame at opposite lateral sides thereof in a conventional manner. The fixed frame includes a pair of mounts 50 to the upper surface of which are secured a pair of bearing plates 52. The upper surfaces of these bearing plates are concavely arcuately curved to match the curvature of the lower bearing surfaces of elements 34, thereby allowing the upper movable frame to laterally rock on the lower fixed frame in a manner and for the reason explained in United States patent specification 3 122 382. The movable frame is retained on the fixed frame to prevent vertical displacement therebetween by flange guides 39.

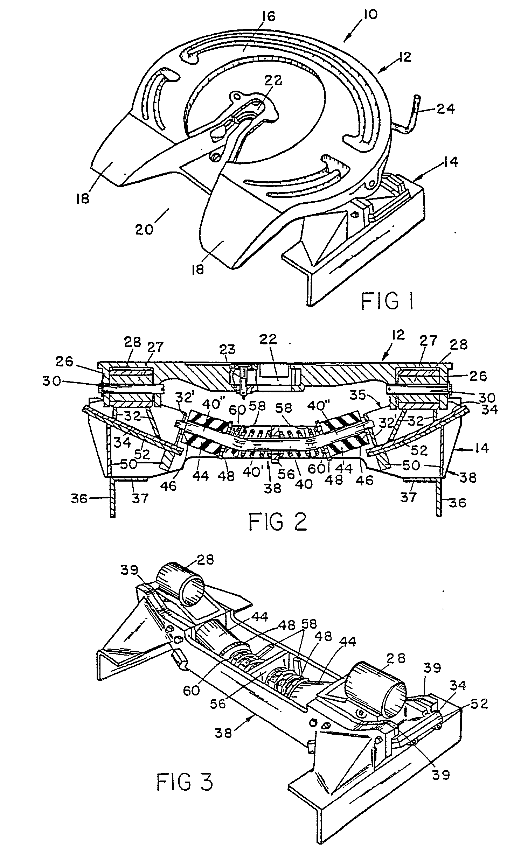

An upstanding centre plate 56 is fixed between the walls of the fixed frame and has an orifice through which the rod 40 passes. Stop members 58 fixed to the walls of the fixed frame 38 on each side of the centre plate 56 are oriented normal to the angular ends of the rod generally parallel to the annular plates 48. The stop members 58 are adapted to abut the annular plates at the extreme positions as will be hereinafter described. Captured between the annular plates 48 and the centre plate 56 is a respective pair of compression coil springs 60 extending around the rod 40. These springs are selected to provide variable biasing force which biases the movable frame and the fifth wheel plate thereon toward the intermediate neutral position depicted in Figure 2, i.e. biasing against movement of the movable frame in a rocking action toward either of the two extreme positions with lateral tilting action of the fifth wheel hitch plate relative to the fixed frame and the frame of the tractor. The coil springs individually provide an increasing biasing force as the movable frame moves increasing amounts away from the intermediate position toward one of the two opposite extreme positions with tilting of the movable frame and fifth wheel hitch plate. At either of the extreme positions, the respective coil spring is compressed to the maximum, with the rubber snubber adjacent to that spring abutting the adjacent stop member 58 thus providing a shock absorbing effect as the extreme position is reached.

During operation of the described hitch, assuming that the hitch is affixed to a truck tractor and a kingpin on the underside of a trailer is held in the jaws 22 of the fifth wheel hitch, any movement of the trailer over terrain which is laterally uneven relative to the tractor will cause the trailer, fifth wheel hitch, and movable frame to tilt by rocking sliding movement between the bearing shoes 34 and the bearing plates 52. It has been found that the biasing force of the compression springs 60 enables the driver to sense or feel the nature of the stabilizing tilting movement of the trailer and hitch relative to the tractor to provide the driver with better knowledge of the condition of his rig during operation. This is significant from a safety standpoint.

Moreover, another benefit accrues from the described structure. When the fifth wheel hitch is disconnected from a kingpin of a laterally tilted trailer and the truck tractor is moved away from the trailer, the coil springs 60 force the fifth wheel hitch plate to its intermediate neutral position so that the driver can readily recouple to another trailer parked on terrain differing from the previous trailer. That is, the axis of bearings 30 will be basically parallel to the horizontal plane of the fixed frame 38 and to that of the truck tractor for easy alignment with the second kingpin. Of course, when the fifth wheel plate is uncoupled, the rear portions will pivot downwardly about the bearings 28 in conventional fashion to give the plate a rear to fore upward slope for easier recoupling.

**Claims**

1. A fifth wheel hitch assembly comprising an elongate stationary frame (38) with arcuately concave bearing plates (52) at opposite ends thereof, a movable frame with a pair of cradles (32) forming a pair of convex shoes (34) seated on the concave bearing plates, a tie rod (40) between the cradles, a fifth wheel plate (12), pivot bearings (27) on the movable frame mounting the fifth wheel plate, the movable frame and fifth wheel plate being shiftable on the stationary frame from an intermediate position in either of two opposite directions, stop means (44) between the movable frame and the stationary frame for limiting movement of the movable frame at predetermined extreme positions in either of the two opposite directions, and resilient biasing means for biasing the movable frame with respect to the fixed frame towards the said intermediate position, characterised in that the stationary frame has a centre plate (56) fixed thereto and extending generally vertically between the cradles, and in that the resilient biasing means comprise a respective coil spring (60) between each of the cradles and the centre plate for biasing the movable frame away from the predetermined extreme positions toward the said intermediate position, each coil spring acting to apply a biasing force which increases with increased movement of the movable frame toward one of the said extreme positions.

2. A hitch assembly according to Claim 1 characterised in that the coil springs (60) comprise a pair of compression springs positioned around the tie rod, and the tie rod extends through an aperture in the centre plate (56).

**Revendications**

1. Ensemble d'attelage à sellette comportant un châssis allongé (38) muni de plaques de support courbes concaves (52) situées à des extrémités opposées du châssis, un châssis mobile comportant un couple de berceaux (32) constituant un couple de patins convexes (34) prenant appui sur les plaques de support concaves, une barre d'accouplement (40) située entre les berceaux, une plaque de sellette (12), des paliers de pivot (27) situés sur le châssis mobile supportant le plaque de sellette, le châssis mobile et la plaque de sellette étant déplaçable sur le châssis fixe à partir d'une position intermédiaire suivant l'une ou l'autre de deux directions opposées, des moyens de butée (44) situés entre le châssis mobile et le châssis fixe afin de limiter le mouvement du châssis mobile dans des positions extrêmes prédéterminées suivant l'une ou l'autre des deux directions opposées, et des moyens élastiques de sollicitation servant à repousser le châssis mobile par rapport au châssis fixe en direction de ladite position intermédiaire, caractérisé en ce que le châssis fixe possède une plaque centrale (56), qui est fixée sur lui-même et s'étend d'une manière générale verticalement entre les berceaux, et que les moyens de sollicitation élastiques comportent un ressort hélicoïdal respectif (60) entre chacun des berceaux et la plaque centrale afin d'écarter le châssis mobile depuis les positions extrêmes prédéterminées en direction de ladite position intermédiaire, chaque ressort hélicoïdal agissant de manière appliquer une force de sollicitation qui augmente lorsque le déplacement du châssis mobile vers l'une desdites positions extrêmes augmente.

2. Ensemble d'attelage selon la revendication 1, caractérisé en ce que les ressorts hélicoïdaux (60) sont constitués par deux ressorts de compression disposés autour de la barre d'accouplement et que la barre d'accouplement passe à travers une ouverture ménagée dans l'axe central (56).

**Patentansprüche**

1. Sattelkupplungsanordnung mit einem länglichen stationären Rahmen (38), der an seinen entgegengesetzten Enden konkav gekrümmte Lagerplatten (52) aufweist, einem beweglichen Rahmen mit zwei Lagerstühlen (32), die zwei konvexe Schuhe (34) bilden, die auf den konkaven Lagerplatten sitzen, einer Verbindungsstange (40) zwischen den Lagerstühlen, einer Drehschemelplatte (12), Schwenklagern (27) auf dem beweglichen Rahmen, die die Drehschemelplatte haltern, wobei der bewegliche Rahmen und die Drehschemelplatte auf dem stationären Rahmen von einer mittleren Stellung in zwei entgegengesetzte Richtungen verschiebbar ist, einer zwischen dem beweglichen Rahmen und dem stationären Rahmen angeordneten Anschlaganordnung (44) zur Begrenzung der Auswanderung des beweglichen Rahmens an vorgegebenen Endstellungen in jeder der beiden entgegengesetzten Richtungen, und mit einer elastischen Vorspannungsanordnung zum Vorspannen des beweglichen Rahmens bezüglich des festen Rahmens in Richtung auf die mittlere Stellung, dadurch gekennzeichnet, daß der stationäre Rahmen eine Mittelplatte (56) aufweist, die an ihm befestigt ist und sich im wesentlichen senkrecht zwischen den Lagerstühlen erstreckt, und daß die elastische Vorspannungsanordnung eine entsprechende Schraubenfeder (60) zwischen jedem Lagerstuhl und der Mittelplatte enthält, um den beweglichen Rahmen von den vorgegebenen Endstellungen weg zur Mittelstellung zu drücken, wobei jede Schraubenfeder eine Vorspannungskraft ausübt, die mit in Richtung auf eine der Endstellungen zunehmender Auswanderung des beweglichen Rahmens zunimmt.

2. Sattelkupplungsanordnung nach Anspruch 1, dadurch gekennzeichnet, daß die Schraubenfedern (60) zwei Druckfedern enthalten, die um die Verbindungsstange herum angeordnet sind und daß sich die Verbindungsstange durch eine Öffnung in der Mittelplatte (56) erstreckt.

**0 030 987**

FIG 1

FIG 2

FIG 3

1